# EUROPEAN PATENT SPECIFICATION

(11) **EP 4 484 994 B1**
(45) Date of publication and mention of the grant of the patent: **02.12.2026**
(21) Application number: 23382670.0
(22) Date of filing: 29.06.2023
(51) Int. Cl.: G01S 1/00, G01S 5/00

(54) **INDOOR POSITIONING AND GUIDANCE SYSTEM BASED ON EXTREMELY LOW FREQUENCY MAGNETIC FIELD BEACONS AND MOBILE DEVICES, AND ASSOCIATED METHOD**
INNENRAUMPOSITIONIERUNGS- UND -FÜHRUNGSSYSTEM AUF BASIS VON EXTREM NIEDERFREQUENTEN MAGNETFELDBAKEN UND MOBILEN VORRICHTUNGEN SOWIE ZUGEHÖRIGES VERFAHREN
SYSTÈME DE POSITIONNEMENT ET DE GUIDAGE INTÉRIEUR BASÉ SUR DES BALISES DE CHAMP MAGNÉTIQUE À FRÉQUENCE EXTRÊMEMENT BASSE ET DES DISPOSITIFS MOBILES, ET PROCÉDÉ ASSOCIÉ

(43) Date of publication of application: 01.01.2025
(73) Proprietor: SILEMELIFE S.L., 41092 Sevilla (ES)
(72) Inventor: RODRÍGUEZ VÁZQUEZ, Antonio Leopoldo, 41092 Sevilla (ES); MARTÍN PRATS, María Ángeles, 41092 Sevilla (ES); BERNAL MÉNDEZ, Joaquín, 41092 Sevilla (ES); FREIRE ROSALES, Manuel José, 41092 Sevilla (ES)
(74) Representative: TRBL Intellectual Property

(56) References cited:
- ES-B1- 2 674 123
- US-A1- 2014 155 098
- US-A1- 2016 245 638
- US-B2- 10 659 270
- US-B2- 10 782 135
- ALAIWI AYMAN AHMED: "The Design and Investigation of an Extremely Low Frequency (ELF) Transmission Data Link", 1 July 2013 (2013-07-01), pages 1 - 382, XP093109260, Retrieved from the Internet <URL:https://eprints.hud.ac.uk/id/eprint/19029/1/A._Alaiwi_u0563838_Thesis_July_2013_final.pdf> [retrieved on 20231205]

## Description

### FIELD OF THE INVENTION

The present invention belongs to the field of positioning technologies. More specifically, the invention relates to the technologies for positioning and guiding individuals which move inside closed or indoor spaces, such as buildings, based on the use of magnetic field beacons which can be detected by a terminal mobile device configured with a software application, such as a smartphone, a tablet, a smartwatch, or the like.

### BACKGROUND OF THE INVENTION

In the last decades, assets and people location services have grown considerably, driven mostly by the worldwide implementation of global positioning system (GPS) services. These services offer different solutions for the continuous monitoring of all kinds of goods, some of them also including means for calculating the travel trajectories of the monitored goods. Regarding the location and positioning of individuals and users, some applications are also configured to provide a guiding path or route from a starting point to a final point. Although this functionality is well established for global navigation satellite system (GNSS) services in open spaces and outdoors, its implementation in closed and indoor spaces still remains open, due to the lack of line of sight (LOS) of GNSS satellites and antennas in such closed/indoor spaces, which prevents a minimum required performance of use.

In view of this problem, several indoor location techniques are known in the prior art, based on different technologies such as: RFID, Bluetooth Low Energy (BLE), Ultra-Wideband (UWB), LiDAR, WiFi, BLE5 AoA, inertial sensors or SILEME, among others.

The use case of RFID is widespread in the control of goods. However, its use for high accuracy positioning requires the arrangement of very large quantities of readers. Moreover, RFID systems do not allow to determine where precisely an object is, but instead can only determine if the object has passed close to a particular locator or beacon, for instance a door or a sector inside a building. The case of inertial sensors or LiDAR technologies is particularly used in robotic applications. However, in most cases they usually require data fusion with many other technologies, thus requiring increased complexity and costs compared to other alternatives.

For the positioning of individuals, three technologies have been mainly adopted, namely BLE, UWB and WiFi. These are moderately expensive technologies, which require the installation of beacons (or repeaters) to operate and which can support multiple locators. However, their main limitation is the degradation of the positioning signals in areas outside the LOS of the emitting beacons, due to attenuation and multipath errors caused by signal reflections. This causes that, for facilities with numerous rooms and/or sections, the number of beacons required to maintain the quality of the service is very high, and often not scalable for large buildings.

UWB solutions that are based on TDoA ("Time Difference Of Arrival") algorithms, or BLE5 AoA (Angle of Arrival) solutions currently have higher performance compared to BLE and WiFi solutions. But, again, the biggest problem of these technologies is that the presence of obstacles, such as walls and objects in the closed/indoor space, substantially worsens the signal quality if the obstacles are mainly metallic. Therefore, in order to maintain good performance, it is again necessary to scale up the number of beacons, growing the necessary infrastructure and, therefore, increasing the complexity of the beacon network, as well as its associated maintenance, deployment and installation costs.

In this respect, another important aspect to consider in the use of indoor positioning technologies is the necessary network infrastructure, as well as data security management. In general, companies use WiFi tracking for internal purposes, such as managing products in a warehouse or materials. Therefore, it is a remarkable effort to implement security measures in the corresponding WiFi access points, so as not to compromise user data, as the management of asset positioning and communications with the internal or external network coexist in the same infrastructure, where it is normal for vulnerabilities and computer attacks to occur.

Another infrastructure problem is the connection with locator devices since, while the cases of WiFi and Bluetooth are normally valid with common devices for guiding people such as smartphones, UWB needs specific hardware and, thereby, its implementation requires a special device for each locator.

Other known technology for indoor positioning is SILEME ("System for indoor location in metallic environments"), as described, for instance, in patent ES 2674123 B1. This technology is focused on locating and positioning assets or individuals in closed environments, which may include metallic elements, and overcomes the problem of positioning signal degradation existing in the aforementioned RF technologies, by using extremely low frequency ("ELF") artificial magnetic fields, which are comprised between 0-300 Hz. However, as with UWB, SILEME requires specific hardware, and only contemplates the positioning of the receivers within a coverage area of at least three beacons. Moreover, this technology lacks guidance or navigation functionalities within the indoor space covered by the network. Other positioning systems based on the exchange of magnetic fields are known in the art, such as, for instance, the one disclosed in patent application US 2014/0155098 A1, Chinese patent application CN 105785317A or scientific article of WU FALIN ET AL: "A Robust Indoor Positioning System based on Encoded Magnetic Field and Low-cost IMU", PLANS 2016 - PROCEEDINGS OF IEEE/ION PLANS 2016, THE INSTITUTE OF NAVIGATION, 8551 RIXLEW LANE SUITE 360 MANASSAS, VA 20109, USA, 14 April 2016 (2016-04-14), pages 204-212, XP056013992. Nevertheless, the first one employs frequencies that lie in the order of the kilo Hertz (kHz) and are, therefore, not immune to attenuations and reflections originated by metallic elements and the second and third ones do not include inter-beacon communications, or they are based on radiofrequency signals.

Being a technology that uses variable low-frequency magnetic fields, SILEME is advantageously immune to non-ferromagnetic solids, so it can be considered a NLOS (non-line-of-sight) positioning technology. However, and despite this advantage, its optimized use for the implementation in mobile devices, as well as the improvement of its location algorithm would be desirable in the present field.

The present invention solves the above need, by proposing a novel guidance functionality based on SILEME and a corresponding detection algorithm which is preferable integrated into a mobile application. Additionally, the invention provides an improved SILEME network where the mobile application manages the use of the sensors, decodes the SILEME signals to interpret the position, manages the coincidences with the map and generates and presents a guidance route in the area covered by the beacons between a plurality of points of interest.

### SUMMARY OF THE INVENTION

As described above, a first object of the invention relates to an indoor positioning and guidance system according to the appended claims. The system generally comprises:
a plurality of beacons adapted to be arranged in an indoor space, wherein said indoor space comprises one or more obstacles comprising a non-ferromagnetic metal; and
at least one receiver adapted to be carried by a user;
wherein the beacons comprise:
   - beacon processing means;
   - inter-beacon communication means connected to the processing means;
   - at least one receiving coil connected to the inter-beacon communication means;
   - at least one generation coil connected to the inter-beacon communication means, and adapted to transmit magnetic field signals in a transmission medium; and
   - a magnetic field generator and a power control means connected to the generation coil.

More specifically, the receiver comprises:
- a magnetometer sensor adapted to detect magnetic field signals transmitted by the generation coil;
- signal decoding means connected to the magnetometer sensor;
- receiver processing means connected to the decoding means;
wherein the magnetic field generator is adapted to generate extremely low frequency, ELF, magnetic field signals with frequencies lower than 300 Hz.

The magnetic field generator is further adapted to generate ELF magnetic field signals comprising:
- one or more positioning subcarriers configuring a positioning channel for determining the relative positioning of the receiver with respect to one or more beacons, wherein each beacon is identified by the receiver by a specific combination of frequencies of the one or more positioning subcarriers transmitted by said beacon, and wherein the positioning subcarriers are further configured to enable the receiver to estimate the response of the transmission medium;
- one or more beacon-receiver subcarriers configuring a beacon-receiver communications channel for identifying one or more beacons and their status by the receiver;
- one or more inter-beacon subcarriers configuring an inter-beacon communications channel for managing information exchanged between neighbouring beacons.

Advantageously in the invention, the magnetic field generator is further adapted to generate a pilot signal for determining the transmission conditions of the positioning channel, the beacon-receiver communications channel and the inter-beacon communications channel, such that the positioning channel, the beacon-receiver communications channel and the inter-beacon communications channel are adaptatively modulated and coded depending on the specific conditions of the ELF magnetic field signals pathloss, the interference due to signals between beacons, the sensitivity of the receiver and the available transmission power margin (generally understood as specific conditions of the transmission medium). Furthermore, the estimated response of the transmission medium derived from the positioning subcarriers is used to adaptively set the modulation and coding of the beacon-receiver communications channel and the inter-beacon communications channel.

In a preferred embodiment of the invention, the receiver comprises a mobile device, such as a smartphone, a tablet or a smartwatch.

In a further preferred embodiment of the invention, the receiver comprises secondary sensors for determining the position or trajectory of the user. More preferably, the secondary sensors comprise inertial measurement units, IMUs.

In a further preferred embodiment of the invention, the receiver is configured with a software application for managing the communications between beacons, or between a beacon and a receiver, and to calculate the position of the user of a guiding path between a plurality of beacons. More preferably, the receiver comprises a display interface configured by the software application. And, even more preferably, the software application is configured with a one or more route optimization algorithms.

In a further preferred embodiment of the invention, the channel configured by the positioning subcarriers is a half-duplex.

In a further preferred embodiment of the invention, the ELF field generator is adapted to generate a signal over a plurality of frequency-multiplexed positioning subcarriers, the beacon-receiver subcarriers or the inter-beacon subcarriers.

In a further preferred embodiment of the invention, the ELF field generator is adapted to transmit the positioning subcarriers, the beacon-receiver subcarriers or the inter-beacon subcarriers orthogonally, or with an adjustable separation between from 0 to 10 Hz, and/or including guard intervals.

In a further preferred embodiment of the invention, the positioning subcarriers are configured with BPSK, DBPSK, or MSK modulation.

In a further preferred embodiment of the invention, the ELF magnetic field signals transmitted in one or more of the positioning subcarriers, in the beacon-receiver subcarriers or the inter-beacon subcarriers comprise error correction codes, CRCs.

A second object of the invention relates to a method for indoor positioning and guidance of a moving user, which comprises the operation of a system according to any of the embodiments described in the present document, and the performance of the following steps:
- arranging a plurality of beacons in an indoor space, wherein said indoor space comprises a plurality of obstacles which may comprise a non-ferromagnetic metal, such as for instance, partially or totally metallic ceilings, walls, doors, or furniture;
- carrying at least one receiver by the user;
- generating a pilot signal for determining the transmission conditions of the positioning channel, the beacon-receiver communications channel and the inter-beacon communication channel in a transmission medium, such that the positioning channel, the beacon-receiver communications channel and the inter-beacon communications channel are adaptatively modulated and coded depending on the specific conditions of the ELF magnetic field signals pathloss, the interference due to signals between beacons, the sensitivity of the receiver and the available transmission power margin, wherein the modulation and coding of the beacon-receiver communications channel and the inter-beacon communications channel are adaptively set based on the estimated response of the transmission medium derived from the positioning subcarriers;
- generating and emitting, by one or more of the beacons, an ELF magnetic field signal;
- detecting, by the magnetometer sensor comprised by the receiver, the ELF magnetic field signal emitted in the previous step;
- calculating, with the decoding means and/or the processing means comprised in the receiver, the position of the user with respect to the beacons wherein the position is calculated at least in part by identifying each beacon from a specific combination of frequencies of the positioning subcarriers transmitted by said beacon and either a guiding path for the user between a plurality of beacons or determining information related to the calculated position of the user.

### DESCRIPTION OF THE DRAWINGS

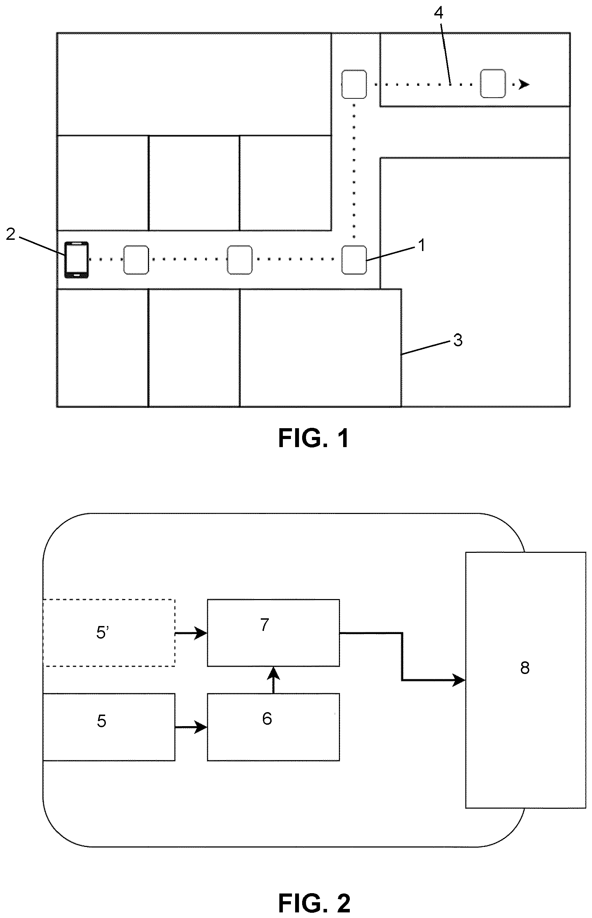

Figure 1 shows an example of indoor guidance use according to the present invention, in which ELF beacons (1) are placed at different points of interest along an indoor route, within a scenario in which walls or other obstacles (3) may appear, including metal elements that will not affect the system. In this case, the application of the receiving mobile device (2), will guide the user through the guidance path (4) or route provided by the system until reaching its final destination.
Figure 2 shows a functional scheme of the receiving mobile device according to the present invention, which comprises an application installed on a smartphone, tablet, smartwatch or the like. In the application, the signal acquired from a magnetometer will be used to obtain the position information contained in the ELF field and to be able to process it and calculate the position with respect to the beacon and the guidance path. All the information necessary for the user to fully follow the chosen guidance path can be displayed via the interface of the mobile application.

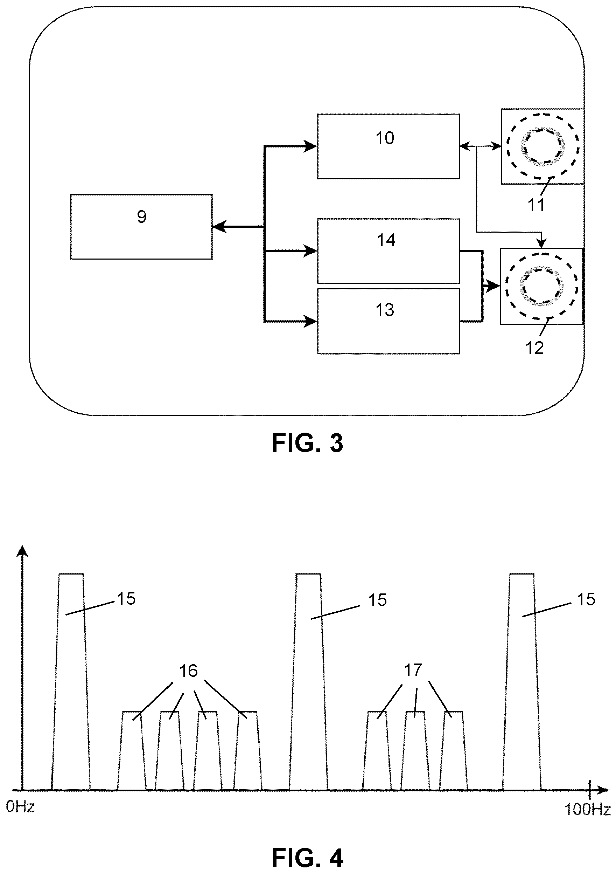

Figure 3 shows the functional scheme of the beacon that constitutes a node of the system. The processing module communicates with the inter-beacon communication module, which manages both the information received through the ELF receiving coil, and that integrated into the signal transmitted by the ELF generation coil. Additionally, the different ELF magnetic field frequencies that will be transmitted for positioning and communication with the receivers are generated, integrating a power control that ensures that the safety limits of magnetic field transmission are not exceeded.
Figure 4 shows an example of the structure of the new communications scheme, including various positioning subcarriers, communication channels between beacons and receivers , and inter-beacon communication channels. This scheme can vary slightly, increasing or decreasing the number of positioning subcarriers and communication channels, as well as their frequency positions. However, at least it must include the positioning subcarriers, containing the identifier of each beacon in its chosen frequency combination.

The embodiments shown in the mentioned figures therefore relate to examples that are representative of the invention, but which do not limit in any case the general interpretation derived from the claims incorporated herein nor, therefore, the scope of protection thereof.

### Reference numbers used in the drawings:

- (1): Beacon.
- (2): Receiver, mobile device.
- (3): Obstacle.
- (4): Guidance path, route.
- (5): Magnetometer of the receiver.
- (5'): Secondary sensors of the receiver.
- (6): Decoding means of the receiver.
- (7): Processing means of the receiver.
- (8): Display interface of the receiver.
- (9): Processing means of the beacon.
- (10): Inter-beacon communication means of the beacon.
- (11): ELF receiving coil.
- (12): ELF generation coil.
- (13): ELF field generator.
- (14): Power control means .
- (15): Receiver positioning subcarriers.
- (16): Beacon-receiver subcarriers.
- (17): Inter-beacon subcarriers.

### DETAILED DESCRIPTION OF THE INVENTION

As described in the preceding sections, a first object of the present invention relates to an indoor positioning and guidance system that improves the basic use of SILEME technology to create points or nodes distributed as points of interest inside a closes space and, preferably, a building or facility. This generates a configurable positioning network comprising a plurality of beacons (1) (see Figure 1) by which one or more mobile receivers (2) can be guided between start and end points, avoiding obstacles (3) and, thereby, optimizing the route (4) between said start/end points. This entails a significant improvement over the SILEME technology, which provides it with user's active guidance functionalities, as well as accurate positioning within a closed/indoor and route calculation in complex (in terms of obstacles (3)) and/or metallic spaces.

The beacons (1) acting as nodes of the network can be arranged at different locations in the structures of the closed/indoor space, such as ceilings, walls, doors, furniture, or other obstacles (3), marking the points of interest which will assist the configuration of the guidance routes inside the monitored space. Moreover, the receivers (2) preferably comprise a mobile terminal device (such as a smartphone, tablet, smartwatch, etc.) equipped with a magnetometer (5) sensor (see Figure 2). The communication functionalities between the beacons (1) and the receivers (2) are, at least in part, controlled by a software, hardware, or firmware application configured in the receivers (2), which also configures the reading and communication functionalities of the magnetometer (5) sensor. As a result, the application allows the magnetometers (5) to detect the beacons (1), in an easy and transparent way for the user, as well as to provide positioning and guiding information, and data control functionalities. Thanks to the application, the beacons (1) can be easily configured to easily adapt to changes in the environment.

In a preferred embodiment of the invention according to Figure 2, the signal acquired from the magnetometer (5) is decoded through signal decoding means (6), and used to obtain the position information contained in the ELF field, by means of processing means (7) optionally configured to process reading signals obtained by other secondary sensors (5'), such as IMUs ("inertial measurement units") which can be also comprised in the receivers (2). The processing means (7) is thus adapted to process the sensors' (5, 5') data to calculate the position of the receiver (3) with respect to the beacons (1) and, optionally, relative to a guidance path or route (4). All the information necessary for the user to fully follow the chosen route (4) can be displayed via a display interface (8) controlled by the application configured in the mobile receiver (2).

In a further preferred embodiment of the invention, each of the beacons (1) is preferably integrated as a single module (see Figure 3) comprising a processing means (9) connected to an inter-beacon communication means (10), which manages both the information received through an ELF receiving coil (11), and that integrated into the signal transmitted by an ELF generation coil (12). Additionally, the different ELF magnetic field frequencies that will be transmitted for positioning and communication with the receivers (2) are generated, preferably, by an ELF field generator (13) and a power control means (14) that ensures that the safety limits of magnetic field transmission are not exceeded. This embodiment of the beacons (1) allow to communicate with the receivers (2) or with other beacons (1) and, thanks to the application configured in the receivers (2), the corresponding communication information can be processed to generate positioning information, and manage it to guide and optimize the routes (4) of the users.

As a significant improvement over the standard SILEME technology, the RF communications module of the receivers (2) and beacons (1) in said technology is replaced, according to the present invention, by an additional communications channel configured by the ELF field generator (13) and integrated into the ELF magnetic field signal itself, which will be transmitted by the ELF generation coil (12). Thereby, any interference caused by metallic obstacles (3) is avoided, and makes the receivers (2) independent of the implementation of other RF technologies. This additional channel is preferably configured as a half-duplex, and takes carriers of the ELF field signal bandwidth to exchange information of interest between the beacons (1) and the receivers (2), such as beacon status data, beacon identifier data, or any other information that is required in the system. The main advantage of using a communications channel integrated into the ELF magnetic field signal itself is that the communication signal between beacons (1), or between a beacon (1) and a receiver (2), is unaffected by non-ferromagnetic metallic obstacles (3). This increases the robustness and integrity of the entire system, as it ensures that, in addition to maintaining positioning functions stable even in the presence of metallic obstacles (3), the system can continue to communicate its status in the event of any problems, and remote configuration and maintenance capabilities are also not lost.

With this objective, the transmission scheme used in the invention is, preferably, a variable magnetic field of frequency less than 300 Hz (Extreme Low Frequency) which is generated by the **ELF** field generator (13) and the power control means (14) and integrated into the **ELF** magnetic field transmitted by the **ELF** generation coil (12). Advantageously in the invention, the **ELF** field generator (13) is adapted to generate a signal over a plurality of subcarriers, through frequency multiplexing. These subcarriers may be transmitted orthogonally by the **ELF** field generator (13), or adding an adjustable separation between them from 0 to 10 Hz, including guard intervals if required. Said subcarriers will be preferably grouped adaptively to the medium, as follows (see Figure 4):
- One or several positioning subcarriers (15), which contain information known to the receiver (2), and which are used for its relative positioning. It is essential for the system that these positioning subcarriers (15) are robust to noise and channel fading, since the position information is directly extracted from them. For this reason, modulations such as BPSK, DBPSK, MSK, or similar modulations will be used, which prioritize robustness against noise at the cost of greater power. These positioning subcarriers (15) will also serve to add redundancy so that the receiver (2) can estimate the response of the medium, and thus adapt the transmission characteristics of the communication channels in a convenient way to minimize errors. In the worst case of the medium, if the error rate causes the system performance to be insufficient, only these subcarriers (15) will be transmitted and the resulting frequency combinatorials will serve as identifiers.
- One or several beacon-receiver subcarriers (16) that make up the beacon-receiver communications channels, using the modulated carriers that include information related to the identification of the beacon (1), its status, or other information of interest for the operation of the system. The identification of the beacons (1) by means of a unique identifier is combined with frequency multiplexing, being able to reuse identifiers and frequencies when exceeding the maximum coverage range. Part of the useful bandwidth will be reserved to include in these carriers an error correction code (CRC), that allows the use of redundant information to detect and correct communication failures. The modulations chosen for these communication channels (16) may vary adaptively, using the estimation of the medium made by the positioning subcarriers (15) and the CRC, maximizing the amount of information without errors.
- One or several inter-beacon subcarriers (17) that make up the inter-beacon communications channels, whose information will be used for neighbourhood management and the rapid deployment of new remote configurations. Each beacon (1) will transmit to other beacons (1) within its range, wherein the nodes of the network are configured as neighbours, in order to detect errors in the installation, and optimize the guidance paths (4), using optimization algorithms such as Dijkstra, Johnson, or similar. Any reconfiguration of the system must be communicated to the receivers (2) using the beacon-receiver communication channels. The inter-beacon communication channels (17) will also be modulated adaptively, using the estimation of the medium made by the positioning subcarriers (15) and the CRC, trying to maximize the amount of information without errors.

Figure 4 thus shows an example of the structure of the above communications scheme, including various positioning subcarriers (15), communication channels between beacons and receivers (16), and inter-beacon communication channels (17). This scheme can vary slightly, increasing or decreasing the number of positioning subcarriers (15) and communication channels (16, 17), as well as their frequency positions. However, at least it must include the positioning subcarriers (15), containing the identifier of each beacon in its chosen frequency combination.

The application integrated in the mobile receivers (2) has the functionality of receiving and processing the information contained in the ELF magnetic field and guide the user between the beacons (1) of the network. This network is formed as a system of nodes where the relationships between them are used to solve how to move around a map. Once the destination is selected, the start of the route (4) is automatically established when any beacon (1) is detected, and the user is guided to the chosen place in an optimized way.

## Claims

1. Indoor positioning and guidance system, said system comprising:
a plurality of beacons (1) adapted to be arranged in an indoor space, wherein said indoor space comprises one or more obstacles (3) comprising a non-ferromagnetic metal; and
at least one receiver (2) adapted to be carried by a user;
wherein the beacons (1) comprise:
- beacon processing means (9);
- inter-beacon communication means (10) connected to the processing means (9);
- at least one receiving coil (11) connected to the inter-beacon communication means (10);
- at least one generation coil (12) connected to the inter-beacon communication means (10), and adapted to transmit magnetic field signals in a transmission medium;
- a magnetic field generator (13) and a power control means (14) connected to the generation coil (12);
wherein the receiver (2) comprises:
- a magnetometer sensor (5) adapted to detect magnetic field signals transmitted by the generation coil (12);
- signal decoding means (6) connected to the magnetometer sensor (5);
- receiver processing means (7) connected to the decoding means (6);
wherein the magnetic field generator (13) is adapted to generate magnetic field signals comprising:
- one or more positioning subcarriers (15) configuring a positioning channel for determining the relative positioning of the receiver (2) with respect to one or more beacons (1),
- one or more beacon-receiver subcarriers (16) configuring a beacon-receiver communications channel for identifying one or more beacons (1) and their status by the receiver (2);
- one or more inter-beacon subcarriers (17) configuring an inter-beacon communications channel for managing information exchanged between neighbouring beacons (1); and
wherein the system is **characterised in that** each beacon (1) is identified by the receiver (2) by a specific combination of frequencies of the one or more positioning subcarriers (15) transmitted by said beacon (1), and wherein the positioning subcarriers (15) are further configured to enable the receiver (2) to estimate the response of the transmission medium; and
the magnetic field generator (13) is further adapted to generate extremely low frequency, ELF, magnetic field signals with frequencies lower than 300 Hz and
generate a pilot signal for determining the transmission conditions of the positioning channel, the beacon-receiver communications channel and the inter-beacon communications channel, such that the positioning channel, the beacon-receiver communications channel and the inter-beacon communications channel are adaptatively modulated and coded depending on the specific conditions of the ELF magnetic field signals pathloss, the interference due to signals between beacons (1), the sensitivity of the receiver (2) and the available transmission power margin, and wherein the estimated response of the transmission medium derived from the positioning subcarriers (15) is used to adaptively set the modulation and coding of the beacon-receiver communications channel and the inter-beacon communications channel.

2. System according to the preceding claim, wherein:
- the receiver (2) comprises a mobile device, a smartphone, a tablet or a smartwatch; and/or
- the receiver (2) comprises a display interface (8) configured by a software application.

3. System according to any of the preceding claims, wherein the receiver (2) comprises secondary sensors (5') for determining the position or trajectory of the user.

4. System according to the preceding claim, wherein the secondary sensors (5') comprise inertial measurement units, IMUs.

5. System according to any of the preceding claims, wherein the receiver (2) is configured with a software application for managing the communications between beacons (1), or between a beacon (1) and a receiver (2), and to calculate the position of the user of a guiding path (4) between a plurality of beacons (1).

6. System according to any of claims 2 or 5, wherein the software application is configured with one or more route optimization algorithms.

7. System according to any of the preceding claims, wherein the channel configured by the positioning subcarriers (15) is a half-duplex.

8. System according to any of the preceding claims, wherein the magnetic field generator (13) is adapted to generate a signal over a plurality of frequency-multiplexed positioning subcarriers (15), the beacon-receiver subcarriers (16) or the inter-beacon subcarriers (17).

9. System according to any of the preceding claims, wherein the magnetic field generator (13) is adapted to transmit the positioning subcarriers (15), the beacon-receiver subcarriers (16) or the inter-beacon subcarriers (17):
- orthogonally;
- with an adjustable separation between from 0 to 10 Hz; and/or
- including guard intervals.

10. System according to any of the preceding claims, wherein the positioning subcarriers (15) are configured with BPSK, DBPSK, or MSK modulation.

11. System according to any of the preceding claims, wherein the ELF magnetic field signals transmitted in one or more of the positioning subcarriers (15), the beacon-receiver subcarriers (16) or the inter-beacon subcarriers (17) comprise error correction codes, CRCs.

12. Method for indoor positioning and guidance of a user, which comprises the operation of a system according to any of the preceding claims, and the performance of the following steps:
- arranging a plurality of beacons (1) in an indoor space, wherein said indoor space comprises one or more obstacles (3) comprising a non-ferromagnetic metal;
- carrying at least one receiver (2) by the user;
**characterised in that** the method further comprises:
- generating a pilot signal for determining the transmission conditions of the positioning channel, the beacon-receiver communications channel and the inter-beacon communications channel in a transmission medium, such that the positioning channel, the beacon-receiver communications channel and the inter-beacon communications channel are adaptatively modulated and coded depending on the specific conditions of the ELF magnetic field signals pathloss, the interference due to signals between beacons (1), the sensitivity of the receiver (2) and the available transmission power margin, wherein the modulation and coding of the beacon-receiver communications channel and the inter-beacon communications channel are adaptively set based on the estimated response of the transmission medium derived from the positioning subcarriers (15);
- generating and emitting, by one or more of the beacons (1), an **ELF** magnetic field signal with frequencies lower than 300 Hz according to the transmission conditions determined in the previous step;
- detecting, by the magnetometer sensor (5) comprised by the receiver (2), the **ELF** magnetic field signal emitted in the previous step;
- calculating, with the decoding means and/or the processing means comprised in the receiver (2), the position of the user with respect to the beacons (1), wherein the position is calculated at least in part by identifying each beacon (1) from a specific combination of frequencies of the positioning subcarriers (15) transmitted by said beacon (1); and
- calculating a guiding path (4) for the user between a plurality of beacons (1) or determining information related to the calculated position of the user.

13. Method according to the preceding claim, wherein the obstacles (3) comprise ceilings, walls, doors, or furniture.

## Patentansprüche

1. Innenraumpositionierungs- und -führungssystem, wobei das genannte System Folgendes umfasst:
eine Vielzahl von Baken (1), die zur Anordnung in einem Innenraum ausgelegt sind, wobei der genannte Innenraum ein oder mehrere Hindernisse (3) mit einem nicht-ferromagnetischen Metall umfasst; und
mindestens einen Empfänger (2), der zum Mitführen durch einen Benutzer ausgelegt ist;
wobei die Baken (1) Folgendes umfassen:
- eine Bakenverarbeitungsvorrichtung (9);
- eine mit der Verarbeitungsvorrichtung (9) verbundene Vorrichtung zur Kommunikation zwischen den Baken (10);
- mindestens eine Empfangsspule (11), die mit der Vorrichtung zur Kommunikation zwischen den Baken (10) verbunden ist;
- mindestens eine Erzeugerspule (12), die mit der Vorrichtung zur Kommunikation zwischen den Baken (10) verbunden und zur Übertragung von Magnetfeldsignalen in einem Übertragungsmedium ausgelegt ist;
- einen Magnetfeldgenerator (13) und eine Leistungssteuereinrichtung (14), die mit der Erzeugerspule (12) verbunden sind;
wobei der Empfänger (2) Folgendes umfasst:
- ein Magnetometer (5), das zum Erfassen der von der Erzeugerspule (12) gesendeten Magnetfeldsignale ausgelegt ist;
- eine mit dem Magnetometer (5) verbundene Signaldekodiereinrichtung (6);
- eine mit der Dekodiereinrichtung (6) verbundene empfängerseitige Verarbeitungseinrichtung (7);
wobei der Magnetfeldgenerator (13) dazu ausgelegt ist, Magnetfeldsignale zu erzeugen, die Folgendes umfassen:
- einen oder mehrere Positionierungsunterträger (15), die einen Positionierungskanal zur Bestimmung der Position des Empfängers (2) relativ zu einer oder mehreren Baken (1) konfigurieren,
- einen oder mehrere Baken-Empfänger-Unterträger (16), die einen Baken-Empfänger-Kommunikationskanal zur Identifizierung einer oder mehrerer Baken (1) und ihres jeweiligen Status durch den Empfänger (2) konfigurieren;
- einen oder mehrere Inter-Baken-Unterträger (17), die einen Inter-Baken-Kommunikationskanal zur Verwaltung von zwischen benachbarten Baken (1) ausgetauschten Informationen konfigurieren; und
wobei das System **dadurch gekennzeichnet ist, dass** jede Bake (1) anhand einer spezifischen Frequenzkombination des einen oder der mehreren von der genannten Bake (1) gesendeten Positionierungsunterträger (15) vom Empfänger (2) identifiziert wird, und wobei die Positionierungsunterträger (15) ferner dazu ausgelegt sind, dem Empfänger (2) die Abschätzung der Reaktion des Übertragungsmediums zu ermöglichen; und
der Magnetfeldgenerator (13) ferner dazu ausgelegt ist, extrem niederfrequente ELF-Magnetfeldsignale mit Frequenzen unter 300 Hz zu erzeugen und ein Pilotsignal zur Bestimmung der Übertragungsbedingungen des Positionierungskanals, des Baken-Empfänger-Kommunikationskanals sowie des Inter-Baken-Kommunikationskanals zu erzeugen, sodass der Positionierungskanal, der Baken-Empfänger-Kommunikationskanal sowie der Inter-Baken-Kommunikationskanal in Abhängigkeit von den spezifischen Bedingungen des Ausbreitungsverlusts der ELF-Magnetfeldsignale, der durch Signale zwischen den Baken (1) verursachten Interferenz, der Empfindlichkeit des Empfängers (2) und der verfügbaren Sendeleistungsreserve adaptiv moduliert und kodiert werden, wobei die aus den Positionierungsunterträgern (15) abgeleitete geschätzte Reaktion des Übertragungsmediums zur adaptiven Einstellung der Modulation und Kodierung des Baken-Empfänger-Kommunikationskanals sowie des Inter-Baken-Kommunikationskanals dient.

2. System nach vorstehendem Anspruch, wobei
- der Empfänger (2) als mobiles Gerät, Smartphone, Tablet oder Smartwatch ausgeführt ist; und/oder
- der Empfänger (2) eine durch eine Softwareanwendung konfigurierte Anzeigeoberfläche (8) umfasst.

3. System nach einem der vorstehenden Ansprüche, wobei der Empfänger (2) Sekundärsensoren (5') zur Bestimmung der Position oder Bewegungsbahn des Benutzers umfasst.

4. System nach vorstehendem Anspruch, wobei die Sekundärsensoren (5') Trägheitsmesseinheiten (IMU) umfassen.

5. System nach einem der vorstehenden Ansprüche, wobei der Empfänger (2) zur Verwendung einer Softwareanwendung zur Verwaltung der Kommunikation zwischen Baken (1) oder zwischen einer Bake (1) und einem Empfänger (2) sowie zur Berechnung der Position des Benutzers auf einem Leitweg (4) zwischen mehreren Baken (1) ausgelegt ist.

6. System nach einem der Ansprüche 2 oder 5, wobei die Softwareanwendung einen oder mehrere Routenoptimierungsalgorithmen umfasst.

7. System nach einem der vorstehenden Ansprüche, wobei der durch die Positionierungsunterträger (15) konfigurierte Kanal ein Halbduplex-Kanal ist.

8. System nach einem der vorstehenden Ansprüche, wobei der Magnetfeldgenerator (13) dazu ausgelegt ist, ein Signal über eine Vielzahl von frequenzmultiplexierten Positionierungsunterträgern (15), Baken-Empfänger-Unterträgern (16) oder Inter-Baken-Unterträgern (17) zu erzeugen.

9. System nach einem der vorstehenden Ansprüche, wobei der Magnetfeldgenerator (13) dazu ausgelegt ist, die Positionierungsunterträger (15), die Baken-Empfänger-Unterträger (16) oder die Inter-Baken-Unterträger (17) wie folgt zu übertragen:
- orthogonal;
- mit einem einstellbaren Abstand zwischen 0 und 10 Hz; und/oder
- unter Verwendung von Schutzintervallen.

10. System nach einem der vorstehenden Ansprüche, wobei die Positionierungsunterträger (15) mit einer BPSK-, DBPSK- oder MSK-Modulation konfiguriert sind.

11. System nach einem der vorstehenden Ansprüche, wobei die in einem oder mehreren der Positionierungsunterträger (15), der Baken-Empfänger-Unterträger (16) oder der Inter-Baken-Unterträger (17) übertragenen ELF-Magnetfeldsignale Fehlerkorrekturcodes und zyklische Redundanzprüfungen (CRC) umfassen.

12. Verfahren zur Innenraumpositionierung und -führung eines Benutzers, das den Betrieb eines Systems nach einem der vorstehenden Ansprüche sowie die Durchführung der folgenden Schritte umfasst:
- Anordnen einer Vielzahl von Baken (1) in einem Innenraum, wobei der genannte Innenraum ein oder mehrere Hindernisse (3) mit einem nicht-ferromagnetischen Metall umfasst;
- Mitführen mindestens eines Empfängers (2) durch den Benutzer;
**dadurch gekennzeichnet, dass** das Verfahren ferner Folgendes umfasst:
- Erzeugen eines Pilotsignals zur Bestimmung der Übertragungsbedingungen des Positionierungskanals, des Baken-Empfänger-Kommunikationskanals und des Inter-Baken-Kommunikationskanals in einem Übertragungsmedium, sodass der Positionierungskanal, der Baken-Empfänger-Kommunikationskanal und der Inter-Baken-Kommunikationskanal in Abhängigkeit von den spezifischen Bedingungen des Ausbreitungsverlusts der ELF-Magnetfeldsignale, der durch Signale zwischen den Baken (1) verursachten Interferenz, der Empfindlichkeit des Empfängers (2) und der verfügbaren Sendeleistungsreserve adaptiv moduliert und kodiert werden, wobei die Modulation und Kodierung des Baken-Empfänger-Kommunikationskanals und des Inter-Baken-Kommunikationskanals adaptiv auf Grundlage der aus den Positionierungsunterträgern (15) abgeleiteten geschätzten Reaktion des Übertragungsmediums eingestellt werden;
- Erzeugen und Aussenden eines ELF-Magnetfeldsignals mit Frequenzen unter 300 Hz durch eine oder mehrere der Baken (1) gemäß den im vorherigen Schritt festgelegten Übertragungsbedingungen;
- Erfassen des im vorherigen Schritt ausgesendeten ELF-Magnetfeldsignals durch das im Empfänger (2) enthaltene Magnetometer (5);
- Berechnen der Position des Benutzers relativ zu den Baken (1) mithilfe der im Empfänger (2) enthaltenen Dekodiereinrichtung und/oder Verarbeitungseinrichtung, wobei die Berechnung der Position zumindest teilweise dadurch erfolgt, dass jede Bake (1) anhand einer spezifischen Frequenzkombination der von der genannten Bake (1) gesendeten Positionierungsunterträger (15) identifiziert wird; und
- Berechnen eines Leitwegs (4) für den Benutzer zwischen einer Vielzahl von Baken (1) oder Ermitteln von Informationen zur berechneten Position des Benutzers.

13. Verfahren nach vorstehendem Anspruch, wobei die Hindernisse (3) Decken, Wände, Türen oder Möbel umfassen.

## Revendications

1. Système de positionnement et de guidage en intérieur, ledit système comprenant :
une pluralité de balises (1) adaptées pour être agencées dans un espace intérieur, dans lequel ledit espace intérieur comprend un ou plusieurs obstacles (3) comprenant un métal non ferromagnétique ; et
au moins un récepteur (2) adapté pour être porté par un utilisateur ;
dans lequel les balises (1) comprennent :
- des moyens de traitement de balise (9) ;
- des moyens de communication entre balises (10) connectés aux moyens de traitement (9) ;
- au moins une bobine de réception (11) connectée aux moyens de communication entre balises (10) ;
- au moins une bobine de génération (12) connectée aux moyens de communication entre balises (10) et adaptée pour transmettre des signaux de champ magnétique dans un milieu de transmission ;
- un générateur de champ magnétique (13) et un moyen de commande de puissance (14) connectés à la bobine de génération (12) ;
dans lequel le récepteur (2) comprend :
- un capteur magnétométrique (5) adapté pour détecter des signaux de champ magnétique transmis par la bobine de génération (12) ;
- des moyens de décodage de signaux (6) connectés au capteur magnétométrique (5) ;
- des moyens de traitement de récepteur (7) connectés aux moyens de décodage (6) ;
dans lequel le générateur de champ magnétique (13) est adapté pour générer des signaux de champ magnétique comprenant :
- une ou plusieurs sous-porteuses de positionnement (15) constituant un canal de positionnement pour déterminer le positionnement relatif du récepteur (2) par rapport à une ou plusieurs balises (1) ;
- une ou plusieurs sous-porteuses balise-récepteur (16) constituant un canal de communication balise-récepteur pour permettre au récepteur (2) d'identifier une ou plusieurs balises (1) et leur état ;
- une ou plusieurs sous-porteuses entre balises (17) constituant un canal de communication entre balises pour gérer les informations échangées entre des balises (1) voisines ; et
le système étant **caractérisé en ce que** chaque balise (1) est identifiée par le récepteur (2) par une combinaison spécifique de fréquences de la ou des sous-porteuses de positionnement (15) transmises par ladite balise (1), et **en ce que** les sous-porteuses de positionnement (15) sont en outre configurées pour permettre au récepteur (2) d'estimer la réponse du milieu de transmission ; et
le générateur de champ magnétique (13) est en outre adapté pour générer des signaux de champ magnétique à extrêmement basse fréquence, ELF, dont les fréquences sont inférieures à 300 Hz, et générer un signal pilote pour déterminer les conditions de transmission du canal de positionnement, du canal de communication balise-récepteur et du canal de communication entre balises, de telle sorte que le canal de positionnement, le canal de communication balise-récepteur et le canal de communication entre balises sont modulés et codés de manière adaptative en fonction des conditions spécifiques d'affaiblissement de propagation des signaux de champ magnétique ELF, des interférences dues aux signaux entre balises (1), de la sensibilité du récepteur (2) et de la marge de puissance de transmission disponible, et dans lequel la réponse estimée du milieu de transmission déduite des sous-porteuses de positionnement (15) est utilisée pour régler de manière adaptative la modulation et le codage du canal de communication balise-récepteur et du canal de communication entre balises.

2. Système selon la revendication précédente, dans lequel :
- le récepteur (2) comprend un dispositif mobile, un smartphone, une tablette ou une montre connectée ; et/ou
- le récepteur (2) comprend une interface d'affichage (8) configurée par une application logicielle.

3. Système selon l'une quelconque des revendications précédentes, dans lequel le récepteur (2) comprend des capteurs secondaires (5') pour déterminer la position ou la trajectoire de l'utilisateur.

4. Système selon la revendication précédente, dans lequel les capteurs secondaires (5') comprennent des unités de mesure inertielle, IMUs.

5. Système selon l'une quelconque des revendications précédentes, dans lequel le récepteur (2) est configuré avec une application logicielle pour gérer les communications entre balises (1), ou entre une balise (1) et un récepteur (2), et pour calculer la position de l'utilisateur sur un trajet de guidage (4) entre une pluralité de balises (1).

6. Système selon l'une quelconque des revendications 2 ou 5, dans lequel l'application logicielle est configurée avec un ou plusieurs algorithmes d'optimisation d'itinéraire.

7. Système selon l'une quelconque des revendications précédentes, dans lequel le canal constitué par les sous-porteuses de positionnement (15) est un canal semi-duplex.

8. Système selon l'une quelconque des revendications précédentes, dans lequel le générateur de champ magnétique (13) est adapté pour générer un signal sur une pluralité de sous-porteuses de positionnement (15), de sous-porteuses balise-récepteur (16) ou de sous-porteuses entre balises (17) multiplexées en fréquence.

9. Système selon l'une quelconque des revendications précédentes, dans lequel le générateur de champ magnétique (13) est adapté pour transmettre les sous-porteuses de positionnement (15), les sous-porteuses balise-récepteur (16) ou les sous-porteuses entre balises (17) :
- de manière orthogonale ;
- avec un espacement réglable de 0 à 10 Hz ; et/ou
- en incluant des intervalles de garde.

10. Système selon l'une quelconque des revendications précédentes, dans lequel les sous-porteuses de positionnement (15) sont configurées avec une modulation BPSK, DBPSK ou MSK.

11. Système selon l'une quelconque des revendications précédentes, dans lequel les signaux de champ magnétique ELF transmis sur une ou plusieurs des sous-porteuses de positionnement (15), des sous-porteuses balise-récepteur (16) ou des sous-porteuses entre balises (17) comprennent des codes de correction d'erreurs, CRCs.

12. Procédé de positionnement et de guidage en intérieur d'un utilisateur, qui comprend le fonctionnement d'un système selon l'une quelconque des revendications précédentes et la mise en œuvre des étapes suivantes :
- agencer une pluralité de balises (1) dans un espace intérieur, dans lequel ledit espace intérieur comprend un ou plusieurs obstacles (3) comprenant un métal non ferromagnétique ;
- faire porter au moins un récepteur (2) par l'utilisateur ;
**caractérisé en ce que** le procédé comprend en outre :
- générer un signal pilote pour déterminer les conditions de transmission du canal de positionnement, du canal de communication balise-récepteur et du canal de communication entre balises dans un milieu de transmission, de telle sorte que le canal de positionnement, le canal de communication balise-récepteur et le canal de communication entre balises sont modulés et codés de manière adaptative en fonction des conditions spécifiques d'affaiblissement de propagation des signaux de champ magnétique ELF, des interférences dues aux signaux entre balises (1), de la sensibilité du récepteur (2) et de la marge de puissance de transmission disponible, dans lequel la modulation et le codage du canal de communication balise-récepteur et du canal de communication entre balises sont réglés de manière adaptative sur la base de la réponse estimée du milieu de transmission déduite des sous-porteuses de positionnement (15) ;
- générer et émettre, par une ou plusieurs des balises (1), un signal de champ magnétique ELF dont les fréquences sont inférieures à 300 Hz selon les conditions de transmission déterminées à l'étape précédente ;
- détecter, au moyen du capteur magnétométrique (5) compris dans le récepteur (2), le signal de champ magnétique ELF émis à l'étape précédente ;
- calculer, au moyen des moyens de décodage et/ou des moyens de traitement compris dans le récepteur (2), la position de l'utilisateur par rapport aux balises (1), dans lequel la position est calculée au moins en partie en identifiant chaque balise (1) à partir d'une combinaison spécifique de fréquences des sous-porteuses de positionnement (15) transmises par ladite balise (1) ; et
- calculer un trajet de guidage (4) pour l'utilisateur entre une pluralité de balises (1) ou déterminer des informations relatives à la position calculée de l'utilisateur.

13. Procédé selon la revendication précédente, dans lequel les obstacles (3) comprennent des plafonds, des murs, des portes ou du mobilier.
